Europäisches Patentamt

European Patent Office

Office européen des brevets

(19)

(11) Numéro de publication: **0 076 764 B1**

# (12) FASCICULE DE BREVET EUROPEEN

(45) Date de publication du fascicule du brevet:
**15.07.87**

(21) Numéro de dépôt: **82401824.6**

(22) Date de dépôt: **06.10.82**

(51) Int. Cl.⁴: **G 01 F 9/00**, G 01 D 7/08, G 01 F 9/02

(54) **Dispositif indicateur de conduite économique.**

(30) Priorité: **07.10.81 FR 8118871**

(43) Date de publication de la demande:
**13.04.83 Bulletin 83/15**

(45) Mention de la délivrance du brevet:
**15.07.87 Bulletin 87/29**

(84) Etats contractants désignés:
**BE DE GB IT NL SE**

(56) Documents cités:
**EP - B - 0 007 881
DE - A - 2 841 233
DE - A - 3 046 076
FR - A - 2 479 333
GB - A - 2 059 654
GB - A - 2 072 341
US - A - 4 197 650**

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Aussedat, Francis, 3, Parc de la Bérangère,
F-92210 Saint-Cloud (FR)**

ACTORUM AG

**Description**

La présente invention s'applique à un dispositif d'assistance à la conduite économique des véhicules automobiles à moteur thermique engagés sur des itinéaires à profils variés tels qu'en particulier les routes en rase campagne qui constituent encore dans la plupart des pays la plus grosse part des trajets de ces véhicules. De tels dispositifs dénommés ordinairement «éconotès» existent déjà sous de nombreuses versions utilisant des composants électroniques et sont proposés pour informer les conducteurs de leur consommation instantanée et les orienter en principe à utiliser des vitesses de déplacement plus limitées conduisant à une diminution de la consommation de carburant unitaire instantanée du véhicule automobile équipé de l'économètre. Les demandes de brevet FR-A-2 479 333 et FR-A-3 046 076 décrivent de tels dispositifs indicateurs de conduite économique.

Les utilisateurs de ces économètres d'assistance à la conduite reprochent généralement à ces équipements de fournir des indications fantaisistes et surtout, sans vraiment l'avouer en fait, de ne pas enseigner à l'utilisateur du véhicule autre chose que la réduction de sa vitesse instantanée en levant le pied de l'accélérateur, c'est-à-dire en réduisant l'ouverture du papillon du carburateur du moteur ou la quantité de carburant injecté.

Pour apprendre aux conducteurs à tirer le meilleur parti de leur véhicule, c'est-à-dire à obtenir pour la vitesse moyenne choisie en fonction des délais de trajet admissibles et du profil (pentes et virages) de la route à parcourir, la consommation la plus faible possible sans augmenter l'usure du véhicule et de son moteur, des moyens d'information plus élaborés doivent être fournis au conducteur.

De tels indicateurs d'assistance à la conduite économique ont déjà été proposés pour être utilisés sur les véhicules routiers lourds en parallèle avec l'enseignement d'un moniteur de conduite économique mais leur utilisation correcte exige un véritable enseignement et l'assistance d'un personnel qualifié et elle ne peut être étendue à l'ensemble des véhicules de tourisme qui parcourent le réseau routier. Le brevet européen 7 881 décrit un tel dispositif.

Parmi les raisons qui conduisent les économètres existant à fournir des indications de consommation fantaisistes et dépit d'un coût d'équipement et surtout d'installation relativement élevé, on peut citer le fait qu'il est nécessaire de mesurer en permanence et avec précision le débit de carburant qui s'écoule vers le moteur; mais cette mesure s'applique à un débit faible et le plus souvent différentiel au niveau des pompes d'alimentation et des pompes d'injection où une partie du débit retourne en by-pass au réservoir, ce qui rend de telles mesures difficiles et imprécises.

L'un des buts de la présente invention est précisément de proposer un économètre qui permette vraiment d'enseigner au conducteur la conduite économique de son véhicule et qui s'affranchisse, comme dans le brevet européen 7 881 précité, des contraintes propres à la mesure directe du débit de carburant.

A cet effet, l'invention a pour objet un dispositif indicateur de conduite économique pour un véhicule automobile à moteur thermique comprenant un ensemble de moyens de mesure constitués par des moyens de mesure de la vitesse de rotation instantanée du moteur, des moyens de mesure de la dépression à l'aspiration du moteur ou, dans le cas d'un moteur à injection de carburant et/ou à compresseur, du débit d'air à l'aspiration ou du taux d'accélération du moteur, des moyens de mesure de la vitesse de déplacement instantanée du véhicule, une unité de calcul de la consommation unitaire réelle instantanée du véhicule à partir des informations fournies par ledit ensemble de moyens de mesure, et des moyens d'affichage de la consommation unitaire réelle instantanée calculée, caractérisé en ce que l'unité de calcul comprend des moyens de calcul de la consommation unitaire théorique minimale possible du véhicule se déplaçant en palier et à une vitesse stabilisée correspondant à la vitesse de déplacement instantanée mesurée et en ce que les moyens d'affichage comprennent un cadran comportant:

– une zone lumineuse mobile, formée d'un ensemble de barres ou de segments lumineux et illuminés jusqu'à une barre ou un segment de consommation instantanée et dont l'étendue illuminée sur le cadran figure l'importance de la consommation unitaire réelle instantanée du véhicule rapportée à une valeur maximale prédéterminée correspondant à l'illumination totale du cadran et susceptible d'être calculée, et

– un index lumineux indiquant sur le cadran la consommation unitaire théorique minimale du véhicule se déplaçant en palier et à ladite vitesse stabilisée.

Pour réaliser les avantages de l'économètre selon le mode de réalisation de l'invention qui vient d'être explicité, on doit rappeler que le but de l'indicateur de la conduite économique est autant d'enseigner au conducteur l'art d'utiliser son véhicule dans les conditions les plus économiques de consommation et de risque d'usure du véhicule que de fournir une indication de consommation unitaire instantanée qui dans tous les cas est entachée d'erreurs et de fluctuations rapides par suite des variations du profil de la route et des conditions de roulage imposées par le trafic. On peut en effet aisément imaginer que, lorsque le conducteur accélère pour démarrer ou pour dépasser un autre véhicule, sa consommation unitaire augmente considérablement pour revenir à des valeurs normales lorsque l'accélération est terminée. De même, lorsque le conducteur lève le pied de l'accélérateur pour ralentir, ou mieux, passe au point mort de sa boîte de vitesses au cours d'un freinage avant l'arrêt ou d'un roulage imposé par l'arrêt du trafic à distance, la consommation unitaire du véhicule devient très faible et, dans tous ces cas aberrants, il n'est pas possible de savoir si la conduite du véhicule se rapproche de l'optimum pour les mêmes conditions de circulation. Cet optimum est par exemple défini comme la conduite pratiquée (rapports de vitesse, taux d'accélération) par un conducteur parfaitement averti des problèmes de conduite économique qui peut se définir comme le meilleur compromis entre les risques d'usure du véhicule, la consommation de carburant, les temps de parcours réalisés et la sécurité de conduite.

Le dispositif indicateur de conduite économique comporte un indicateur de consommation unitaire réelle qui n'utilise pas de capteur de débit de carburant vers le carburateur ou la pompe d'injection mais qui exploite, au moyen de l'unité de calcul, les données enregistrées en permanence sur la vitesse de rotation du moteur, la dépression à l'aspiration et la vitesse de déplacement du véhicule repérée par exemple à la sortie de la boîte de vitesse, pour calculer la consommation unitaire du véhicule à partir d'un réseau de courbes d'essai du véhicule et de son moteur. Ces données sur la conduite du véhicule et de son moteur sont plus faciles à capter et à transformer en grandeurs électriques fiables que celles concernant le débit de carburant. Pour l'enseignement du conducteur à la conduite économique, elles présentent de plus l'avantage de ne pas faire intervenir les usures et les imperfections du moteur par rapport à celui du véhicule idéal en parfait état de marche. Le conducteur apprend ainsi à tirer le meilleur parti de son véhicule tel qu'il est, sans être inhibé par les imperfections et insuffisances de celui-ci par rapport au véhicule idéal.

Les indications lumineuses obtenues sur le cadran présentent une résolution suffisamment significative pour être bien repérées en utilisant par exemple, une barre ou un segment différent pour chaque consommation unitaire d'un litre de carburant consommé par centaine de kilomètres parcourus. La consommation unitaire théorique optimale en palier est repérée avec la même précision et résolution d'un litre de consommation unitaire et pour mieux assurer sa visibilité, selon un mode de réalisation particulier de l'invention, l'index lumineux indiquant la consommation unitaire théorique minimale du véhicule est constitué par l'une des barres juxtaposées correspondant à cette consommation minimale et apparaissant en contraste lumineux sur le cadran, c'est-à-dire éteinte si elle se trouve dans la zone lumineuse figurant l'importance de la consommation unitaire réelle et est donc inférieure à cette consommation unitaire réelle, et respectivement allumée si elle se trouve hors de cette zone lumineuse et est donc supérieure à la consommation unitaire réelle calculée.

Comme on l'a déjà rappelé, la résolution des barres ou segments correspond à une unité de consommation unitaire telle que des litres de carburant consommés par centaine de kilomètres parcourus ou bien des miles par gallon de carburant utilisé.

Selon un mode de réalisation très important de l'invention, l'unité de calcul élabore également une information instantanée sur le rapport de boîte de vitesses optimal utilisable pour obtenir la consommation unitaire minimale pour les conditions de fonctionnement enregistrées (vitesse du moteur et du véhicule et dépression d'aspiration) et affiche sur un cadran auxiliaire le numéro de ce rapport de boîte de vitesse par exemple sous la forme d'un numéro en digit à 7 segments.

Le numéro de rapport de boîte de vitesse calculé par l'unité de calcul et affiché sur un cadran auxiliaire tient compte des possibilités du moteur et de la vitesse instantanée du véhicule ainsi que des risques d'usure prématurée du moteur et de l'agrément de conduite du véhicule dans la circulation. En effet, si l'on se plaçait du seul point de vue de la consommation unitaire du véhicule, il suffirait d'annoncer presque continuellement le rapport de boîte de vitesse le plus élevée donnant la plus faible vitesse de rotation du moteur pour obtenir la consommation unitaire minimale.

La souplesse de la discrimination de l'unité de calcul pour déterminer le rapport de boîte de vitesses donnant le meilleur compromis entre la basse consommation, l'usure du moteur et l'agrément de conduite, donne confiance au conducteur du véhicule dans la justesse du choix du rapport de vitesse proposé par l'unité de calcul. Pour éviter des erreurs d'appréciation nuisibles à l'agrément de la conduite dans cette gamme de vitesse, l'indication du rapport de boîte de vitesses optimal est éteinte lorsque le véhicule roule à fiable vitesse, par exemple à une vitesse inférieure à 20 kilomètres à l'heure. Il en est de même des indications de consommation optimale et réelle calculées.

Selon un mode particulier de réalisation, l'unité de calcul, commandée par un programme stocké dans une mémoire, détermine le débit horaire instantané du carburant par lecture d'un tableau de valeurs de débit stockées dans une mémoire et adressables à partir de la dépression et du régime de rotation mesurées du moteur, calcule la consommation unitaire réelle instantanée à partir du débit horaire instantané lu dans la mémoire et de la vitesse mesurée de déplacement instantanée du véhicule, et calcule la consommation unitaire théorique minimale du véhicule se déplaçant en palier et à une vitesse stabilisée égale à la vitesse instantanée mesurée par lecture d'un tableau annexe de la mémoire adressable à partir de la vitesse mesurée de déplacement instantanée du véhicule.

De préférence, les moyens de mesure de paramètres de fonctionnement du véhicule engendrent respectivement un signal électrique de vitesse moteur de fréquence proportionnelle au régime de rotation du moteur, un signal électrique de pression dont la fréquence est proportionnelle à la dépression à l'aspiration du moteur, un signal électrique de vitesse du véhicule dont la fréquence est proportionnelle à la vitesse du véhicule, et le dispositif comprend des moyens pour convertir la fréquence desdits signaux électriques en valeurs numériques lues par l'unité de calcul.

Selon une autre mode particulier de réalisation du dispositif, l'unité de calcul est dotée de moyens de sommation et/ou d'intégration, dans l'espace parcouru par le véhicule à partir d'un point d'initialisation, des indications instantanées des consommations unitaires réelle instantanée calculée et théorique minimale calculée, et de moyens de mémorisation du résultat des additions et/ou intégrations et d'affichage de ce résultat sous la forme des volumes ou poids de carburants réel calculé et minimal théorique calculé, consommés depuis le point d'initialisation, cet affichage étant réalisé en permanence ou, le cas échéant, à la demande du conducteur afin de permettre à celui-ci de comparer la consommation totale réelle calculée de son véhicule sur le parcours effectué avec la consommation totale théorique minimale calculée pour les mêmes conditions de vitesse du véhicule et sur le même parcours supposé en palier.

Pour comparer les consommations totales (réelle calculée et théorique) sur un parcours donné, l'unité de calcul peut aussi être dotée de moyens de sommation et/ou d'intégration dans le temps à partir d'un instant d'initialisation, des débits instantanés de carburant calculés réel et respectivement théorique minimal.

D'autre buts, avantages et caractéristiques de la présente invention apparaîtront à la lecture de la description d'un mode de réalisation de l'invention faite à titre non limitatif et en regard du dessin annexé où:

— la figure 1 représente un cadran de visualisation des consommations unitaires réelle calculée et théorique optima dans le cas courant où cette dernière est inférieure à la consommation réelle calculée;

— la figure 2 représente le même cadran dans le cas exceptionnel où la consommation réelle calculée est inférieure à la consommation minimale optima;

— la figure 3 est un schéma synoptique et logique de l'indicateur de conduite économique selon l'invention.

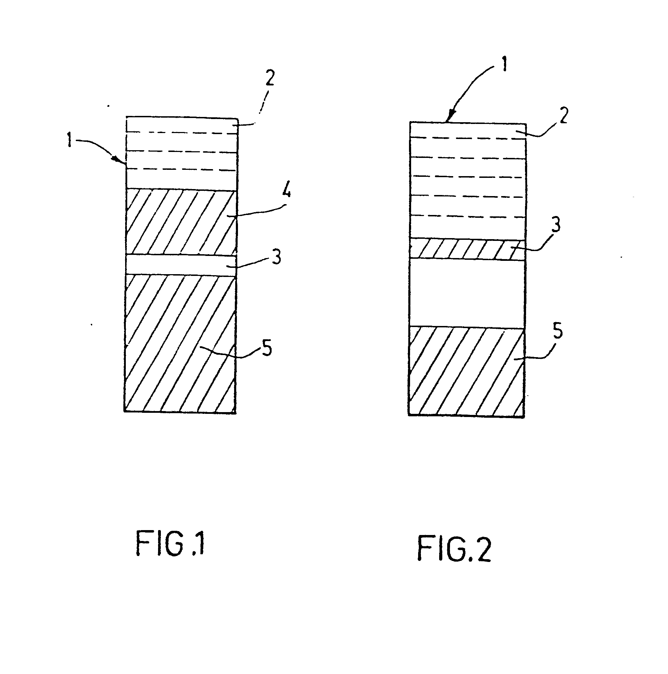

Les figures 1 et 2 représentent chacune le cadran de visualisation de l'indicateur de forme rectangulaire et qui est dénommé «bar-graphe». Ce cadran 1 comporte généralement une vingtaine de barres horizontales 2 représentant chacune une consommation unitaire d'un litre de carburant par centaine de kilomètres parcourus. Chaque barre 2 est susceptible d'être illuminée par un procédé électro-optique tel que des cristaux liquides ou des diodes électroluminescentes.

Pour matérialiser par exemple une consommation unitaire instantanée de 7 litres/100 km, les 7 barres horizontales inférieures sont illuminées et le conducteur peut, d'un coup d'œil, juger de l'importance de sa consommation unitaire instantanée en comparant la hauteur illuminée à la hauteur totale du cadran, on peut aussi inscrire sur chaque barre la consommation unitaire correspondante.

Sur la figure 1, on voit qu'une série de barres est illuminée à partir du bas du cadran, le nombre de ces barres illuminées étant par exemple de 16 pour représenter une consommation unitaire instantanée de 16 litres/100 km. Le conducteur ne peut compter le nombre de barres illuminées mais il voit par comparaison globale qu'environ les 3/4 de la surface du cadran sont illuminées et que si la consommation unitaire lorsque la totalité du cadran est illuminée est de 20 l/100 km, sa consommation instantanée est voisine de 15 l/100 km. Dans le même temps, le conducteur repère la position d'une barre éteinte 3 qui figure, en contraste, la consommation unitaire théorique minimale du véhicule roulant à la même vitesse instantanée mais à vitesse stabilisée et en palier. Cette consommation unitaire théorique est de 10 litres/100 km que le conducteur repère par la position de la barre 3 sensiblement au milieu du cadran 1.

Le conducteur peut également repérer l'excès théorique de consommation par rapport à l'idéal théorique en estimant la hauteur 4 des bandes illuminées au-dessus de la barre 3. La hauteur relative par rapport au cadran des barres illuminées 5 en-dessous de la barre 3 permet de repérer la valeur de la consommation théorique minimale. Pour obtenir une faible consommation de carburant, le conducteur doit s'efforcer de rapprocher le plus possible et pendant le temps le plus long possible la partie supérieure 4 de la zone illuminée sur le cadran 1 du «bar-graphe» de la barre 3 de consommation minimale théorique.

La figure 2 représente une indication du bar-graphe qui indique une consommation unitaire instantanée plus faible que la consommation théorique minimale. Cette situation de la figure 2 se rencontre seulement pendant de courts instants mais elle n'est pas aberrante. Elle correspond notamment au cas où le véhicule roule à vitesse relativement élevée alors que le conducteur n'appuie plus sur l'accélérateur parce que le véhicule roule dans une descente ou bien décélère sur le frein moteur ou en roulant sur l'erre par suite d'un débrayage ou d'une mise au point mort.

La barre 3 de consommation unitaire théorique est située sur la figure 2 approximativement au niveau de 11 litres/100 km et apparaît illuminée nettement au-dessus des bornes 5, illuminées à la partie inférieure du cadran et qui matérialisent une consommation réelle calculée d'environ 6 litres/100 km correspondant à une marche du véhicule en descente à une vitesse relativement élevée ou en décélération.

Le conducteur qui utilisera intelligemment le bar-graphe selon l'invention ne manquera pas de relier les indications fournies au profil de la route qu'il parcourt à l'instant de la mesure. Il admettra ainsi comme normale une surconsommation unitaire du véhicule lorsque celui-ci gravit une pente ou accélère et ne conclura pas à une conduite particulièrement économique lorsqu'il descend une côte. On doit noter à ce sujet que l'indication de consommation unitaire instantanée calculée est influencée par la mesure de la dépression ou, le cas échéant, du débit d'air aspiré ou du taux d'accélération du moteur, alors que le calcul de la consommation théorique minimale n'est influencé que par la vitesse instantanée du véhicule. Dans le cas d'un véhicule à moteur Diesel, le débit d'air aspiré ayant peu de signification, on pourra prendre comme indication du taux d'accélération du moteur une indication de position de l'accélérateur correspondant sensiblement à une quantité définie de carburant par tour de moteur.

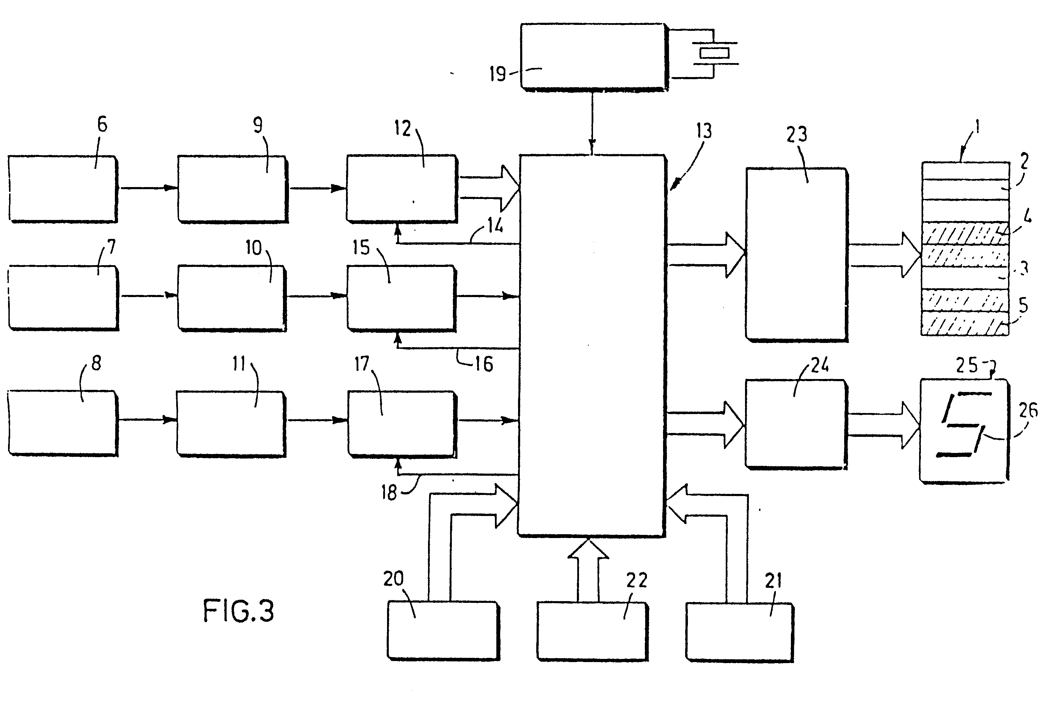

Comme on l'a déjà indiqué précédemment, un élément très important de l'enseignement du conducteur à la conduite économique à l'aide du bargraphe selon l'invention est constitué par l'indication de rapport de vitesses conseillé. Ainsi, pour un véhicule automobile moderne doté de 5 rapports de boîte de vitesses de marche avant, dès que le véhicule se déplace à des vitesses de l'ordre de 70 à 80 km/h avec des dépressions modérées à l'aspiration, le conducteur voit apparaître sur le cadran auxiliaire (25) des rapports de vitesse conseillés (fig. 3) l'indication «5» qui lui rappelle que la consommation minimale s'obtient en enclenchant le 5ème rapport de vitesse.

Cette indication de rapport de vitesse conseillé n'est pas aberrante car elle est corrigée par l'unité de calcul en fonction de la dépression à l'admission ou, dans le cas des moteurs à injection de carburant, du débit d'air aspiré et, dans le cas des moteurs Diesel, de la position de l'accélérateur qui règle le débit de carburant par coup de piston. Ainsi, sur le véhicule que l'on vient d'évoquer, et qui est doté de 5 rapports de vitesse, lorsque le conducteur appelle la pleine ouverture du carburateur pour dépasser un autre véhicule, à une vitesse de 90 km/h par exemple, l'indication du rapport de vitesse conseillé s'éteint et le conducteur peut utiliser par exemple le 3ème rapport de vitesse pour faire tourner le moteur du véhicule à haut régime et disposer d'une forte accélération. Dès que le dépassement est terminé et que le conducteur relève le pied de l'accélérateur, l'indication du 5ème rapport de vitesse apparaît rappelant au conducteur que la conduite vraiment économique à cette allure s'obtient avec le 5ème rapport de vitesse et non pas avec le 4ème rapport cependant plus agréable pour franchir les petites côtes du parcours.

Pour la fiabilité et la crédibilité des informations fournies par l'indicateur de conduite économique aussi bien sur les consommations que sur les rapports de vitesse, les indications lumineuses de l'appareil s'éteignent à faible vitesse du véhicule par exemple en-dessous de 20 km/h où elles n'auraient pas de sens.

La figure 3 représente la structure schématique complète du dispositif indicateur de conduite économique équipé du cadran de lecture des consommations unitaires appelé «bar-graphe» et dont les indications sont décrites sur les figures 1 et 2.

Des capteurs respectivement de dépression 6, de vitesse de roulage du véhicule 7 et de régime moteur 8, sont reliés à des convertisseurs de fréquence correspondants 9, 10, 11 qui convertissent la fréquence des signaux électriques de ces capteurs en valeurs respectivement:

– de dépression (par exemple de 0 à 600 millimètres de mercure) intégrée par un compteur externe 12 lu périodiquement par une unité de calcul 13 qui le remet périodiquement à zéro par une ligne de réactualisation 14;

– de vitesse du véhicule étalée entre 0 et 180 km/h par exemple et qui actionne une bascule 15 reliée à l'unité de calcul 13 et remise à zéro périodiquement par une ligne de réactualisation 16;

– de régime moteur étalé entre 0 à 6000 tours/minute par exemple et qui actionne une bascule 17 reliée à l'unité de calcul 13 et remise à zéro périodiquement par une ligne de réactualisation 18.

L'unité de calcul 13 qui constitue le cœur du dispositif indicateur est reliée à une base de temps 19 et à une mémoire programme 20 ainsi qu'à une mémoire vive externe 21. Pour réaliser les opérations de calcul des consommations réelle instantanée et théorique minimale, l'unité de calcul 13 est également reliée à une mémoire de tableaux de valeur 22 qui correspond à un réseau de courbes de mesures relatives au type de moteur du véhicule et permet de calculer pour un régime moteur donné et une dépression au collecteur d'admission donnée (ou respectivement une position d'accélérateur donnée dans le cas d'un moteur Diesel) le débit de carburant consommé en litres/heure. Ces courbes sont figurées dans la mémoire 22 par un tableau de débits en litres/heure en fonction de la dépression et du nombre de tours moteur pour environ 200 à 300 points différents. L'unité de calcul 13 calcule le débit intantané de carburant par interpolation linéaire à partir de quatre valeurs encadrant le point à calculer. A partir de la consommation horaire instantanée de carburant, l'unité de calcul 13 déduit de l'information de vitesse de roulage du véhicule fournie par le capteur 7 donnant par exemple le nombre de tours/minute de l'arbre de sortie de la boîte de vitesses, la consommation unitaire instantanée du véhicule transmise à un excitateur 23 du bar-graphe 1.

L'unité de calcul 13 calcule également en permanence, en fonction de l'indication de vitesse de roulage du véhicule fournie par le capteur 7 et d'une courbe de consommation à vitesse stabilisée logée dans la mémoire 22 sous forme d'un tableau annexe, la consommation minimale théorique et la fait afficher par l'intermédiaire de l'excitateur 23 sur la barre 3 du bar-graphe 1.

L'indication du rapport de vitesse conseillé est également calculée par l'unité de calcul 13 et affichée par l'intermédiaire d'un excitateur 24 qui fait afficher sur un cadran auxiliaire 25 à l'aide d'un digit à 7 segments le numéro 26 en clair du rapport de vitesse conseillé. On voit sur la figure que le cadran auxiliaire 25 conseille au conducteur d'utiliser le 5ème rapport de boîte de vitesse.

Pour réaliser le calcul de rapport de vitesse conseillé, l'unité de calcul détermine tout d'abord le rapport de vitesse engagé par le conducteur en calculant le rapport entre le nombre de tours de l'arbre de sortie de la boîte de vitesses et le nombre de tours du moteur. L'unité de calcul compare alors le rapport de réduction ou de multiplication de la boîte de vitesse avec un tableau de correspondance de la charge du moteur et en déduit s'il est nécessaire de conseiller l'utilisation d'un autre rapport de boîte de vitesses que celui enclenché par le conducteur. De manière à attirer judicieusement l'attention du conducteur, le cadran auxiliaire 25 est éteint si le rapport de vitesse utilisé par le conducteur est bon et allumé seulement si un autre rapport est conseillé. Dès que le conducteur a passé le rapport conseillé, le cadran 25 s'éteint. Les indications du cadran 25 ne sont pas uniquement orientées dans le sens de la consommation la plus favorable. Ainsi, dans le cas où un conducteur roulant à allure modérée en 5ème vitesse accélère rapidement, pour dépasser un autre véhicule par exemple, le cadran 25 s'allume et conseille au conducteur d'utiliser la 4ème vitesse et si l'accélération est très brutale et la vitesse de véhicule limitée (par exemple 80 km/h) le cadran 25 peut conseiller un nouveau rétrogradage pour dépasser en 3ème vitesse avec plus de sécurité.

Lorsque le conducteur a levé le pied de l'accélérateur, ce qui peut être repéré par l'existence d'une forte dépression à l'admission, l'indication du rapport de vitesse le plus favorable sera de préférence éteinte, car elle gênerait la conduite du véhicule respectant les impératifs de sécurité. Un tel cas se rencontre dans les descentes et d'une façon générale lorsque le conducteur utilise le frein moteur pour obtenir une décélération économique en se ménageant la possibilité d'une réaccélération rapide.

Le bar-graphe, c'est-à-dire le cadran 1 et le cadran 25 qui sont commandés par l'unité de calcul via les excitateurs 23 et 24 constituent la liaison entre le conducteur et l'unité de calcul et doivent être lisibles dans toutes les situations de roulage du véhicule (jour, grand-soleil, nuit, ville) sans gêner la conduite de celui-ci.

Les indications sur ces cadrans 1 et 25 peuvent être réalisées en technologie LED ou bien à l'aide de cristaux liquides.

Bien entendu, la présente invention est susceptible de nombreuses variantes accessibles à l'homme de l'art, suivant les applications envisagées.

**Revendications**

1. Dispositif indicateur de conduite économique pour un véhicule automobile à moteur thermique, comprenant un ensemble de moyens de mesure constitués par des moyens (8) de mesure de la vitesse de rotation instantanée du moteur, des moyens (6) de mesure de la dépression à l'aspiration du moteur ou, dans le cas d'un moteur à injection de carburant et/ou à compresseur, du débit d'air à l'aspiration ou du taux d'accélération du moteur, des moyens (7) de mesure de la vitesse de déplacement instantanée du véhicule, une unité (13) de calcul de la consommation unitaire réelle instantanée du véhicule à partir des informations fournies par ledit ensemble de moyens de mesure, et des moyens (1) d'affichage de la consommation unitaire réelle instantanée calculée, caractérisé en ce que l'unité de calcul (13) comprend des moyens (22) de calcul de la consommation unitaire théorique minimale possible du véhicule se déplaçant en palier et à une vitesse stabilisée correspondant à la vitesse de déplacement instantanée mesurée et en ce que les moyens d'affichage comprennent un cadran (1) comportant:
   – une zone lumineuse mobile, formée d'un ensemble de barres (2) ou de segments lumineux et illuminés jusqu'à une barre ou un segment de consommation instantanée et dont l'étendue illuminée (4, 5) sur le cadran (1) figure l'importance de la consommation unitaire réelle instantanée du véhicule par rapport à une valeur maximale prédéterminée correspondant à l'illumination totale du cadran (1) et susceptible d'être calculée par l'unité de calcul (13), et
   – un index lumineux (3) indiquant sur le cadran la consommation unitaire théorique minimale du véhicule se déplaçant en palier et à ladite vitesse stabilisée.

2. Dispositif indicateur selon la revendication 1, caractérisé en ce que l'index lumineux (3) indiquant la consommation unitaire théorique minimale du véhicule est constitué par l'une des barres ou l'un des segments correspondant à cette consommation minimale et apparaissant en contraste lumineux sur le cadran (1), c'est-à-dire respectivement éteint(e) si elle ou il se trouve dans la zone lumineuse (4, 5) figurant l'importance de la consommation unitaire réelle et allumé(e) si elle ou il se trouve hors de cette zone lumineuse (4, 5).

3. Dispositif indicateur selon l'une des revendications 1 ou 2, caractérisé en ce que la résolution des barres (2) ou segments correspond à une unité de consommation unitaire telle que des litres de carburant consommés par centaine de kilomètres parcourus ou bien des milles par gallon de carburant utilisé.

4. Dispositif indicateur selon l'une des revendications 1 à 3, caractérisé en ce que l'unité de calcul (13) élabore également une information instantanée sur le rapport de boîte de vitesses optimal utilisable pour obtenir la consommation unitaire minimale pour les conditions de fonctionnement mesurées (vitesses du moteur et du véhicule et dépression d'aspiration) et affiche sur un cadran auxiliaire (25) le numéro de ce rapport de boîte de vitesses, par exemple sous la forme d'un numéro (26) en digit à 7 segments.

5. Dispositif indicateur selon l'une quelconque des revendications 1 à 4, caractérisé en ce que l'unité de calcul (13) est commandée par un programme stocké dans une première mémoire (20), détermine le débit horaire instantané de carburant par lecture d'un tableau de valeurs de débit stockées dans une seconde mémoire (22) et adressables à partir de la dépression et du régime de rotation mesurés du moteur, calcule la consommation unitaire réelle instantanée à partir du débit horaire instantané lu dans la seconde mémoire (22) et de la vitesse mesurée de déplacement instantanée du véhicule, et calcule la consommation unitaire théorique minimale du véhicule se déplaçant en palier et à une vitesse stabilisée égale à la vitesse instantanée mesurée par lecture d'un tableau annexe de la seconde mémoire (22) adressable à partir de la vitesse mesurée de déplacement instantanée du véhicule.

6. Dispositif indicateur selon la revendication 5, caractérisé en ce que les moyens de mesure (8, 6, 7) de paramètres de fonctionnement du véhicule engendrent respectivement:
– un signal électrique de vitesse moteur de fréquence proportionnelle au régime de rotation du moteur;
– un signal électrique de pression dont la fréquence est proportionnelle à la dépression à l'aspiration du moteur;
– un signal électrique de vitesse du véhicule dont la fréquence est proportionnelle à la vitesse du véhicule,
et en ce que le dispositif comprend des moyens (11, 9, 10) pour convertir la fréquence desdits signaux électriques en valeurs numériques lues par l'unité de calcul (13).

7. Dispositif indicateur selon l'une des revendications 1 à 6, caractérisé en ce que l'unité de calcul (13) est dotée d'une part de moyens de sommation et/ou d'intégration, dans l'espace parcouru par le véhicule à partir d'un point d'initialisation, des indications instantanée des consommations unitaires suivantes:
– réelle instantanée calculée, et
– théorique minimale calculée;
et d'autre part de moyens de mémorisation du résultat des additions et/ou intégrations et d'affichage de ce résultat sous la forme de volumes ou poids de carburant:
– réel calculé, et
– minimal théorique calculé,
consommés depuis le point d'initialisation, cet affichage étant réalisé en permanence ou, le cas échéant, à la demande du conducteur afin de permettre à celui-ci de comparer la consommation totale réelle calculée de son véhicule sur le parcours effectué avec la consommation totale théorique minimale calculée pour les mêmes conditions de vitesse du véhicule et sur le même parcours supposé en palier.

8. Dispositif indicateur selon l'une des revendications 1 à 6, caractérisé en ce que l'unité de calcul (13) est dotée de moyens de sommation et/ou d'intégration dans le temps à partir d'un instant d'initialisation, des débits instantanés de carburant calculés réel et respectivement théorique minimal et de moyens de mémorisation du résultat des additions et/ou intégrations et d'affichage de ce résultat sous la forme des volumes ou poids de carburant:
– réel calculé,
– minimal théorique calculé,
consommé depuis le point d'initialisation, cet affichage étant réalisé en permanence ou, le cas échéant, à la demande du conducteur afin de permettre à celui-ci de comparer la consommation totale, réelle calculée de son véhicule sur le parcours effectué avec la consommation théorique minimale calculée pour les mêmes conditions de vitesse du véhicule et sur le même parcours supposé en palier.

## Claims

1. A device for indicating economical driving for a motor vehicle having a heat engine, comprising an assembly of measuring means formed by means (8) for measuring the instantaneous speed of rotation of the engine, means (6) for measuring the depression at the intake of the engine or, in the case of an engine with fuel injection and/or a supercharger device, the air flow rate at the intake or the rate of acceleration of the engine, means (7) for measuring the instantaneous speed of displacement of the vehicle, a unit (13) for calculating the real instantaneous unitary consumption of the vehicle from the data supplied by said assembly of measuring means, and means (1) for displaying the calculated real intantaneous unitary consumption, characterised in that the calculating unit (13) comprises means (22) for calculating the minimum possible theoretical unitary consumption of the vehicle when travelling on the flat and at a stabilised speed corresponding to the measured instantaneous speed of displacement, and that the display means comprise a screen (1) comprising:
– a movable luminous zone formed by an assembly of luminous bars (2) or luminous segments which are illuminated as far as an instantaneous consumption bar or segment and the illuminated extent (4, 5) of which on the screen (1) represents the level of the real instantaneous unitary consumption of the vehicle with respect to a maximum predetermined value corresponding to total illumination of the screen (1) and capable of being calculated by the calculating unit (13), and
– a luminous index (3) which indicates on the screen the minimum theoretical unitary consumption of the vehicle when travelling on the flat and at said stabilised speed.

2. An indicator device according to claim 1 characterised in that the index (3) indicating the minimum theoretical unitary consumption of the vehicle is formed by one of the bars or one of the segments corresponding to said minimum consumption and appearing in contrasting manner in respect of light on the screen (1), that is to say being respectively extinguished if it is in the luminous zone (4, 5) representing the level of the real unitary consumption and illuminated if it is outside said luminous zone (4, 5).

3. An indicator device according to one of claims 1 or 2 characterised in that the resolution of the bars (2) or segments corresponds to a unit of unitary consumption such as litres of fuel consumed per hundred of kilometres covered or miles per gallon of fuel used.

4. An indicator device according to one of claims 1 to 3 characterised in that the calculating unit (13) also produces instantaneous information relating to the optimum gearbox ratio which can be used to achieve minimum unitary consumption under the measured operating conditions (speeds of the engine and the vehicle and intake depression) and displays on an auxiliary screen (25) the number of said gearbox ratio, for example in the form of a number (26) consisting of a seven-segment digit.

5. An indicator device according to any one of claims 1 to 4 characterised in that the calculating unit (13) is controlled by a program stored in a first memory (20), determines the instantaneous hourly flow rate of fuel by reading a table of flow rate values stored in a second memory (22) and adressable on the basis of the measured depression and rate of rotation of the engine, calculates the instantaneous real unitary consumption from the instantaneous hourly flow rate read from the second memory (22) and the measured instantaneous speed of displacement of the vehicle, and caclulates the minimum theoretical unitary consumption of the vehicle when travelling on the flat and at a stabilised speed equal to the instantaneous speed measured by reading a supplementary table of the second memory (22) which is adressable on the basis of the measured instantaneous speed of displacement of the vehicle.

6. An indicator device according to claim 5 characterised in that the means (8, 6, 7) for measuring operating parameters of the vehicle respectively generate:

– an electrical signal in respect of engine speed of a frequency proportional to the rate of rotation of the engine;

– an electrical signal in respect of pressure whose frequency is proportional to the depression at the intake of the engine; and

– an electrical signal in respect of the vehicle speed whose frequency is proportional to the speed of the vehicle,
and that the device comprises means (11, 9, 10) for converting the frequency of said electrical signals into numerical values which are read by the calculating unit (13).

7. An indicator device according to one of claims 1 to 6 characterised in that the calculating unit (13) is provided on the one hand with means for summing and/or integrating, in the space covered by the vehicle from an initialisation point, the following instantaneous indications of the levels of unitary consumption:

– calculated instantaneous real consumption; and

– calculated minimum theoretical consumption; and on the other hand means for memorising the result of the addition and/or integration operations and displaying said result in the form of volumes or weights of fuel:

– calculated real volume or weight, and

– calculated theoretical minimum volume or weight,
which have been consumed from the initialisation point, said display being provided permanently or if required at the wish of the driver in order to permit the driver to compare the calculated total real consumption of his vehicle over the distance travelled with the calculated total minimum theoretical consumption for the same conditions in respect of vehicle speed and over the same distance assumed to be covered on the flat.

8. An indicator device according to one of claims 1 to 6 characterised in that the calculating unit (3) is provided with means for summing and/or integrating in respect of time from an initialisation moment, calculated instantaneous fuel flow rates which are the real and the minimum theoretical rates respectively and means for memorising the result of the addition and/or integration operations and displaying said result in the form of volumes or weights of fuel:

– calculated real volume or weight, and

– calculated theoretical minimum volume or weight,
which has been consumed from the initialisation point, said display being provided permanently or if required at the wish of the driver in order to permit the driver to compare the calculated total real consumption of his vehicle over the distance travelled with the calculated total minimum theoretical consumption for the same conditions in respect of vehicle speed and over the same distance assumed to be covered on the flat.

## Patentansprüche

1. Vorrichtung zum Anzeigen ökonomischen Fahrens für ein Kraftfahrzeug mit Verbrennungsmotor, mit einer Anzahl Messanordnungen, die eine Messanordnung (8) für die momentane Rotationsgeschwindigkeit des Motors aufweist, eine Messanordnung (6) für den Ansaugunterdruck des Motors oder, im Falle eines Einspritzmotors und/oder eines Kompressionsmotors für den Ansaugluftbedarf oder für den Beschleunigungsgrad des Motors, eine Messanordnung (7) für die momentane Geschwindigkeit des Fahrzeugs, mit einer Recheneinheit (13) für den tatsächlichen spezifischen Momentanverbrauch des Fahrzeugs, die Informationen von den Messanordnungen enthält, und mit einer Anzeigeanordnung (1) des berechneten tatsächlichen spezifischen Momentanverbrauchs, dadurch gekennzeichnet, dass die Recheneinheit (13) eine Rechenanordnung (22) aufweist, für den theoretisch möglichen minimalen spezifischen Verbrauch des sich in der Ebene und mit konstanter Geschwindigkeit fortbewegenden Fahrzeugs, entsprechend der gemessenen momentanen Fortbewegungsgeschwindigkeit und dass die Anzeigeanordnung eine Skala (1) aufweist mit:

– einer beweglichen beleuchteten Zone, die aus einer Anzahl von Streifen (2) oder Leuchtsegmenten besteht und die bis zu einem Momentanverbrauchsstreifen oder -segment beleuchtet sind und deren beleuchtete Menge (4, 5) auf der Skala (1) den tatsächlichen spezifischen Momentanverbrauch des Fahrzeugs bezüglich eines vorgegebenen Maximalwerts anzeigt, der der vollständigen Beleuchtung der Skala (1) entspricht und der von der Recheneinheit (13) errechnet werden kann und

– einem beleuchteten Index (3), der auf der Skala den theoretisch minimalen spezifischen Verbrauch des Fahrzeugs anzeigt, das sich in der Ebene und mit konstanter Geschwindigkeit fortbewegt.

2 Vorrichtung nach Anspruch 1, dadurch gekennzeichnet, dass der beleuchtete Index (3), der den theoretisch minimalen spezifischen Verbrauch des Fahrzeugs anzeigt, aus einem der Streifen oder der Segmente besteht entsprechend diesem Minimalverbrauch und im Lichtkontrast zur Skala (1) erscheint, d.h. dunkel, wenn er oder es sich in der beleuchteten Zone (4, 5) befindet, die die Höhe des tatsächlichen spezifischen Verbrauchs anzeigt und beleuchtet, wenn er oder es sich ausserhalb der beleuchteten Zone (4, 5) befindet.

3. Vorrichtung nach einem der Ansprüche 1 oder 2, dadurch gekennzeichnet, dass die Unterteilung der Streifen (2) oder Segmente einer spezifischen Verbrauchseinheit entspricht, z.B. der Anzahl von verbrauchten Brennstofflitern pro durchfahrenen 100 Kilometer oder auch Meilen pro Gallone.

4. Vorrichtung nach einem der Ansprüche 1 bis 3, dadurch gekennzeichnet, dass die Recheneinheit (13) ebenfalls eine Momentaninformation erstellt über den optimal einlegbaren Geschwindigkeitsgang, um einen minimalen spezifischen Verbrauch zu erzielen unter den gemessenen Funktionsbedingungen (Geschwindigkeiten des Motors und des Fahrzeugs sowie Ansaugunterdruck) und auf einer Hilfsskala (1) die Zahl dieses Geschwindigkeitsgangs anzeigt z.B. in Form einer digitalen Ziffer (26) aus sieben Segmenten.

5. Vorrichtung nach einem der Ansprüche 1 bis 4, dadurch gekennzeichnet, dass die Recheneinheit (13) von einem Programm gesteuert wird, das in einem ersten Speicher (20) enthalten ist, den Kraftstoff-Momentanverbrauch durch Auslesen einer in einem zweiten Speicher (22) gespeicherten Werttabelle feststellt, die ausgehend vom Unterdruck und dem gemessenen Rotationswert des Motors adressierbar sind, den tatsächlichen spezifischen Momentanverbrauch ausgehend von dem aus dem zweiten Speicher (22) ausgelesenen Wert und der gemessenen Momentangeschwindigkeit der Fortbewegung des Fahrzeugs berechnet sowie den theoretisch minimalen spezifischen Verbrauch des Fahrzeugs berechnet, das sich in der Ebene und mit konstanter Geschwindigkeit bewegt, die gleich der gemessenen Momentangeschwindigkeit ist mittels Auslesens einer zweiten Tabelle im zweiten Speicher (22), die adressierbar ist ausgehend von der gemessenen Momentangeschwindigkeit der Fortbewegung des Fahrzeugs.

6. Vorrichtung nach Anspruch 5, dadurch gekennzeichnet, dass die Messanordnungen (8, 6, 7) für die Funktionsparameter des Fahrzeugs erzeugen:
– ein elektrisches Signal der Motorgeschwindigkeit, dessen Frequenz proportional zum Rotationszustand des Motors ist bzw.

– ein elektrisches Signal des Drucks, dessen Frequenz proportional zum Ansaugunterdruck des Motors ist bzw. – ein elektrisches Signal der Fahrzeuggeschwindigkeit, dessen Frequenz proportional zur Fahrzeuggeschwindigkeit ist
und dass die Vorrichtung Anordnungen (11, 9, 10) aufweist um die Frequenzen der elektrischen Signale in numerische Werte umzuwandeln, die von der Recheneinheit (13) lesbar sind.

7. Vorrichtung nach einem der Ansprüche 1 bis 6, dadurch gekennzeichnet, dass die Recheneinheit (13) einerseits eine Summier- und/oder Integriereinheit aufweist für die spezifischen Momentanverbrauchswerte des Fahrzeugs ausgehend von einem Einsatzpunkt während der vom Fahrzeug zurückgelegten Strecke und zwar:
– tatsächlicher berechneter Momentanwert und
– theoretisch minimaler berechneter Wert;
und andererseits Speichereinheiten für das Ergebnis der Additionen und/oder Integrationen und zur Anzeige des Resultats in Form von Brennstoffvolumen oder -gewicht und zwar:
– tatsächlicher berechneter Wert und
– minimal theoretischer berechneter Wert,
die seit dem Einsatzpunkt verbraucht wurden, wobei diese Anzeige permanent erfolgt oder gegebenenfalls auf Anfragen, des Fahrers hin, um ihm zu ermöglichen, den tatsächlichen berechneten vollständigen Verbrauch seines Fahrzeuges während des zurückgelegten Weges mit dem theoretisch minimalen berechneten totalen Verbrauch zu vergleichen für die gleichen Geschwindigkeiktsbedingungen des Fahrzeugs und für den gleichen in der Ebene angenommenen Weg.

8. Vorrichtung nach einem der Ansprüche 1 bis 6, dadurch gekennzeichnet, dass die Recheneinheit (13) mit einer Summier- und/oder Integriereinheit der Zeit versehen ist, ausgehend von einem Einsatzzeitpunkt für den tatsächlichen berechneten Momentanverbrauch an Kraftstoff bzw. den theoretisch minimalen Verbrauch sowie eine Speichereinheit aufweist für das Resultat der Summierung und/oder Integration und zur Anzeige dieses Resultats in Form von Kraftstoffvolumen oder -gewicht und zwar
– tatsächlicher berechneter Wert
– minimal theoretischer berechneter Wert
für den Verbrauch seit dem Einsatzpunkt, wobei diese Anzeige permanent erfolgt oder gegebenenfalls auf Abfrage durch den Fahrer um ihm zu ermöglichen, den totalen tatsächlichen berechneten Verbrauch seines Fahrzeuges während des zurückgelegten Weges mit dem theoretisch minimalen berechneten Verbrauch zu vergleichen für die gleichen Geschwindigkeitsbedingungen des Fahrzeuges und auf denselben in der Ebene angenommenen Weg.

FIG.1

FIG.2

FIG.3